# FASCICULE DE BREVET EUROPEEN

(11) **EP 2 939 560 B1**
(45) Date de publication et mention de la délivrance du brevet: **11.07.2018**
(21) Numéro de dépôt: 14166781.6
(22) Date de dépôt: 01.05.2014
(51) Int. Cl.: A44C 5/10

(54) **Dispositif et procédé d'assemblage à pivotement d'au moins deux pièces, ensemble correspondant de deux pièces assemblées**
Vorrichtung und Verfahren zum drehbaren Zusammenbau von mindestens zwei Teilen, und Einheit aus den zwei zusammengebauten Teilen
Device and method for pivotably connecting at least two parts, corresponding set of two assembled parts

(43) Date de publication de la demande: 04.11.2015
(73) Titulaire: ROLEX SA, 1211 Genève 26 (CH)
(72) Inventeur: Catheline, Adrien, F-74520 Valleiry (FR); Christian, Martin, F-74800 Eteaux (FR); Cusin, Mathieu, F-74350 Andilly (FR); Sirdey, Pierre, CH-1208 Genève (CH)
(74) Mandataire: Moinas & Savoye SARL

(56) Documents cités:
- CH-A5- 695 389

## Description

L'invention concerne un dispositif d'assemblage, ou d'attache, à pivotement d'au moins deux pièces, notamment deux maillons d'un bracelet, par exemple d'un bracelet de montre.

Un tel dispositif d'assemblage permet d'assembler des maillons, généralement par le biais d'un axe de guidage en pivotement et d'une vis, les maillons assemblés pouvant se déplacer en rotation les uns par rapport aux autres.

Un assemblage de ce type est exposé à un risque de dévissage intempestif. Ce problème, bien connu des horlogers, est causé par les mouvements répétés des maillons les uns par rapport aux autres lors du porter du bracelet ou par des chocs.

Pour résoudre ce problème, on connaît par le document CH695389 un dispositif d'assemblage de maillons d'un bracelet de montre, permettant d'assembler des maillons, formés par exemple de deux mailles extérieures et une maille centrale, les maillons pouvant se déplacer angulairement les uns par rapport aux autres. Ce dispositif d'assemblage comprend une vis munie d'une tête, à l'une de ses extrémités, et d'une partie filetée, à son autre extrémité. Une partie médiane de la vis, de forme cylindrique, joue le rôle d'axe de guidage en rotation de la maille centrale. Pour limiter le risque de dévissage intempestif, un canon tubulaire, en matériau élastique et pourvu d'un rétrécissement annulaire, est chassé dans un perçage de passage de la vis traversant l'une des mailles extérieures. La vis comprend une gorge annulaire destinée à recevoir le rétrécissement du canon. Lors de l'assemblage, la vis est introduite dans le canon jusqu'à engagement de son rétrécissement dans la gorge annulaire de la vis. Grâce à cela, le canon exerce sur la vis une force de serrage radiale qui s'ajoute à la force de maintien exercée par les filets de la vis. La vis est ainsi bloquée axialement par rapport au maillon. Une telle solution nécessite d'assembler plusieurs composants, ce qui implique un temps d'assemblage relativement long. En outre, la force de serrage exercée par le rétrécissement annulaire du canon sur la vis devant être importante, les opérations d'assemblage et/ou de désassemblage peuvent s'avérer difficiles.

La présente invention vient améliorer la situation.

A cet effet, l'invention concerne un dispositif d'assemblage pour attacher à pivotement au moins deux pièces, tel que défini par la revendication 1. L'invention concerne aussi un ensemble comportant au moins deux pièces attachées à l'aide du dispositif d'assemblage tel que précédemment défini.

L'invention concerne également un bracelet comportant au moins deux maillons attachés à l'aide du dispositif d'assemblage tel que précédemment défini.

L'invention concerne enfin un procédé d'assemblage à pivotement d'au moins deux pièces à l'aide du dispositif d'assemblage tel que précédemment défini, caractérisé en ce qu'il comprend, après introduction du dispositif d'assemblage dans une ouverture traversant une deuxième pièce, une étape de vissage lors de laquelle la vis est vissée dans une première pièce, entraînant en translation axiale l'axe de guidage en pivotement du dispositif d'assemblage et la déformation élastique de la bague élastique du dispositif d'assemblage.

L'invention est plus précisément définie par les revendications.

Ces objets, caractéristiques et avantages de la présente invention seront exposés en détail dans la description suivante de modes de réalisation particuliers faits à titre non-limitatif en relation avec les figures jointes parmi lesquelles :
La figure 1 représente un assemblage de deux maillons d'un bracelet comportant un dispositif d'assemblage selon une première forme de réalisation de l'invention, en cours de montage.
La figure 2 représente le dispositif d'assemblage selon la première forme de réalisation.
La figure 3 représente une vue en coupe axiale du dispositif d'assemblage selon la première forme de réalisation.
La figure 4 représente une bague élastique du dispositif d'assemblage selon la première forme de réalisation.
La figure 5 représente l'assemblage de la figure 1, après montage, en vue de coupe axiale selon A-A.
La figure 6 représente l'assemblage de la figure 1 en vue de coupe axiale selon B-B.
La figure 7 représente l'assemblage de la figure 1 au niveau de la bague élastique dans une phase intermédiaire de son montage, en vue de coupe axiale selon A-A.
La figure 8 représente l'assemblage de la figure 1 dans sa position finale d'assemblage au niveau de la bague élastique, en vue de coupe axiale selon A-A.
La figure 9 représente l'assemblage de la figure 1 dans sa position finale au niveau de la partie terminale de la vis du dispositif d'assemblage, en vue de coupe axiale selon A-A.
La figure 10 représente une vue en coupe axiale du dispositif d'assemblage selon une deuxième forme de réalisation.
La figure 11 représente une vue en coupe axiale du dispositif d'assemblage au niveau de la bague élastique selon la deuxième forme de réalisation.
La figure 12 représente une vue en coupe axiale du dispositif d'assemblage selon une troisième forme de réalisation.

L'invention concerne un dispositif d'assemblage, ou d'articulation, à pivotement destiné à assembler aux moins deux pièces pouvant pivoter l'une par rapport à l'autre. Il peut être utilisé pour assembler des maillons, par exemple des maillons d'un bracelet tel qu'un bracelet de montre.

Les éléments identiques ou correspondants, qui sont représentés sur les différentes figures, portent les mêmes références, sauf indication contraire. Par convention, nous appellerons direction longitudinale la direction parallèle à l'axe du dispositif d'assemblage et direction transversale la direction perpendiculaire.

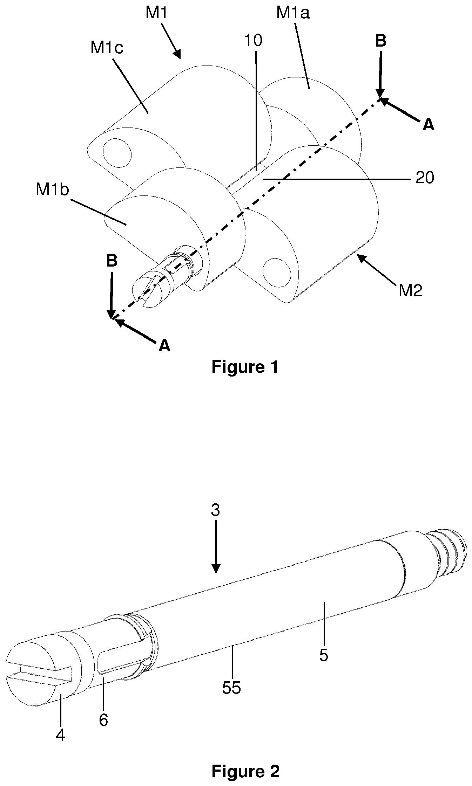

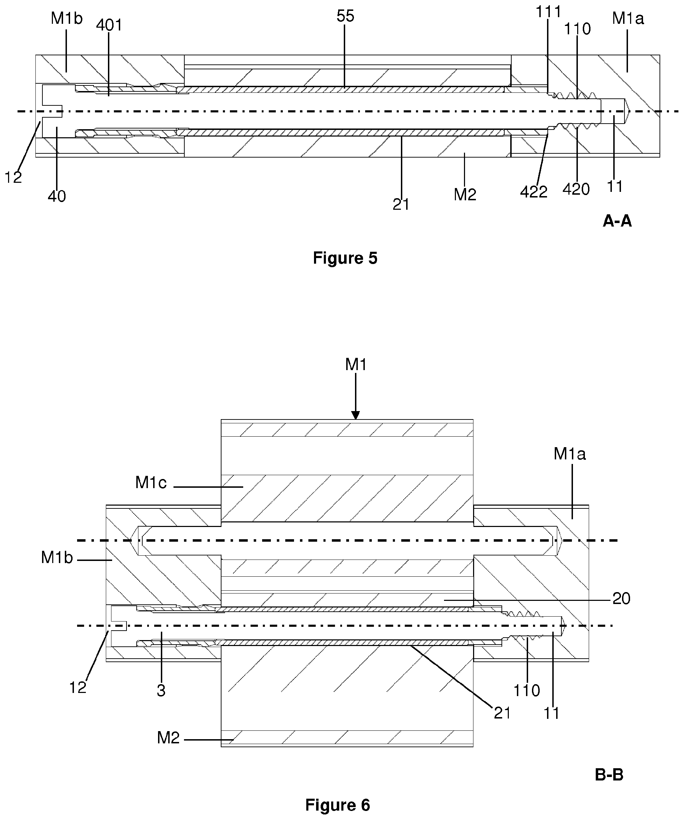

Les figures 1 à 9 concernent une première forme de réalisation du dispositif d'assemblage 3 de l'invention.

Sur la figure 1, on a représenté un assemblage de deux maillons de bracelet M1, M2 par le biais du dispositif d'assemblage 3, en cours de montage, selon une première forme de réalisation de l'invention.

Le maillon M1 est composé de deux mailles extérieures M1a, M1b solidarisées l'une à l'autre, de façon connue, notamment par une maille centrale M1c. Par le terme « maille », on entend ici désigner une unité, ou un élément simple, d'un maillon. En variante, le maillon M1 pourrait être monobloc. Les deux mailles extérieures M1a, M1b et la maille centrale M1c délimitent un logement central 10 de réception d'une portion d'extrémité latérale 20 du maillon M2 dont seule la maille centrale est représentée sur les figures.

En référence à la figure 2, le dispositif d'assemblage 3 comporte une vis 4 et un axe 5 de guidage en pivotement, que nous pourrons appeler parfois plus simplement « axe 5 » par la suite.

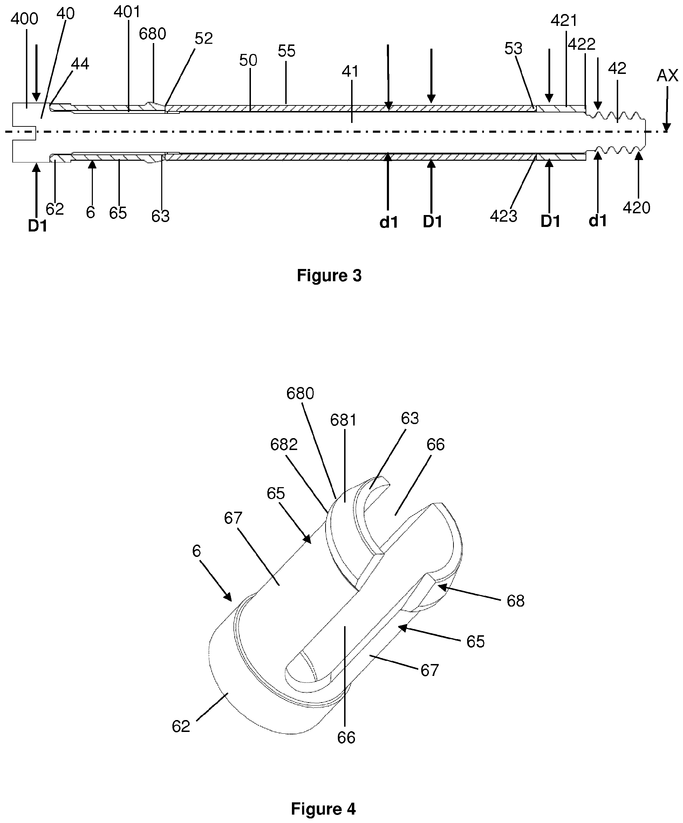

En référence à la figure 3, la vis 4 comprend une partie tête 40, de forme cylindrique et de diamètre D1, une partie intermédiaire (ou partie corps) 41, de forme cylindrique et de diamètre d1, et une partie terminale filetée 42. Le diamètre D1 est supérieur au diamètre d1.

La partie tête 40 intègre une tête de vis 400. Les parties tête 40 et intermédiaire (ou corps) 41 sont séparées par une portée annulaire 44. Elles sont solidaires l'une de l'autre et forment ici un composant monobloc.

La partie terminale 42 comprend une section filetée 420, à l'une de ses extrémités, et une section annulaire de jonction 421, à son autre extrémité, reliées l'une à l'autre. La section annulaire de jonction 421 se présente comme un anneau distinct de la vis 4, de diamètres extérieur et intérieur respectivement égaux, ou sensiblement égaux, aux diamètres D1 et d1 de la vis 4. Elle est par exemple solidarisée à la partie terminale 42 de la vis 4 par chassage ou soudage. Une extrémité de l'anneau 421 forme une portée 423 recevant l'appui d'une seconde extrémité 53 de l'axe 5 de guidage en pivotement. La section filetée 420 a un diamètre extérieur ici égal ou sensiblement égal au diamètre d1.

L'axe 5 de guidage en pivotement présente une forme cylindrique tubulaire d'axe AX, correspondant à l'axe de la vis 4, et comporte une première extrémité ouverte 52 et une deuxième extrémité ouverte 53. Il ménage un logement interne 50, de réception de la vis 4 qui est coaxial à la vis 4. Le diamètre interne de l'axe 5 est égal, ou sensiblement égal, au diamètre d1 de la vis 4. Son diamètre externe est sensiblement égal au diamètre D1 de la vis 4. Sa partie centrale présente une surface périphérique 55 formant une surface de pivotement d'un second maillon M2 relativement à un premier maillon M1.

Avantageusement, cet axe 5 de guidage en pivotement peut être réalisé en céramique frittée, ou en matériau composite formé d'un mélange de céramique et d'un métal, ou d'un polymère (thermoplastique par exemple). Ce matériau permet de réduire l'usure par frottement. L'enseignement du document EP2057914 peut par exemple être appliqué. Alternativement, l'axe de guidage 5 peut être réalisé en acier. La vis 4 et/ou la section annulaire de jonction 421, ainsi que les maillons M1, M2, peuvent avantageusement être réalisés en acier ou dans un métal précieux, tel que l'or ou le platine.

Le dispositif d'assemblage 3 comprend enfin une bague élastique 6, dont une première extrémité 62 comprend une forme annulaire de diamètre extérieur sensiblement égal à D1, qui se trouve en appui sur la portée 44 définie par la tête 40 de la vis 4. Elle comprend une seconde extrémité 63 qui vient en butée avec l'extrémité 52 de l'axe 5 de guidage en pivotement.

La bague élastique 6 est plus particulièrement représentée sur la figure 4. Elle comprend donc une première extrémité formant une base annulaire 62, de diamètre sensiblement égal à D1, venant entourer la vis 4, d'où s'étendent deux pattes élastiques 65 dans une direction longitudinale, c'est-à-dire parallèle à l'axe de la bague élastique 6. En remarque, lorsque le dispositif d'assemblage 3 est monté, cet axe de la bague élastique se confond à l'axe AX de l'axe 5 ainsi qu'à l'axe du dispositif d'assemblage 3. Les deux pattes élastiques 65 de la bague 6 se présentent comme des portions de cylindres, tronqués par deux échancrures 66 longitudinales. Chaque patte élastique 65 comprend une première partie 67 en forme de portion de cylindre, de diamètre légèrement inférieur au diamètre de la base annulaire 62. Chaque patte élastique 65 comprend une tête 68, agencée vers la seconde extrémité 63 de la bague élastique 6. Ces têtes 68 présentent à leur extrémité respective des portions de cylindre de diamètre sensiblement égale au diamètre de la base annulaire 62 qui est ici sensiblement égal au diamètre D1 de la vis 4. Ces têtes 68 comprennent de plus une portion annulaire 680 de diamètre D2, délimitée par deux flancs inclinés 681, 682 pour faciliter respectivement l'insertion et le retrait du dispositif d'assemblage 3, comme cela sera détaillé par la suite. Dans le mode de réalisation qui est illustré, le diamètre D2 est supérieur au diamètre D1. La portion annulaire 680 de plus grand diamètre forme ainsi une zone périphérique saillante, ou un renflement, de la bague élastique 6, ainsi que du dispositif d'assemblage 3 après son montage, qui remplit la fonction de blocage axial du dispositif d'assemblage, par coopération avec un obstacle d'un maillon. Cette portion annulaire 680 est en effet destinée à être insérée dans une zone particulière de forme complémentaire (la zone 120) aménagée dans un maillon à assembler, comme cela sera détaillé par la suite. Selon ce mode de réalisation, la bague élastique 6 est destinée à un montage vers la tête 40 de la vis 4. Cette dernière présente une section de diamètre réduit d2 en vis-à-vis des pattes élastiques 65, pour libérer un espace 401 entre la surface périphérique extérieure de la vis 4 et les pattes élastiques 65, permettant ainsi leur déformation en direction de la vis 4.

La maille centrale du second maillon M2 est traversée par un perçage 21 cylindrique de passage du dispositif d'assemblage 3, de diamètre sensiblement égal ou légèrement supérieur à D1, dans sa portion d'extrémité latérale 20.

La maille M1a du premier maillon M1 comporte un trou 11 de réception de l'extrémité filetée 420 du dispositif d'assemblage 3, muni d'un taraudage 110. Le trou 11 est ici un trou borgne. En variante, il pourrait traverser la maille M1a. Le trou 11 est légèrement plus large, à proximité de son embouchure sur le logement 10, de manière à former une portée 111 jouant le rôle de butée de positionnement de la vis 4 en fin de vissage, recevant plus particulièrement l'appui de l'extrémité 422 terminale de la section annulaire de jonction 421.

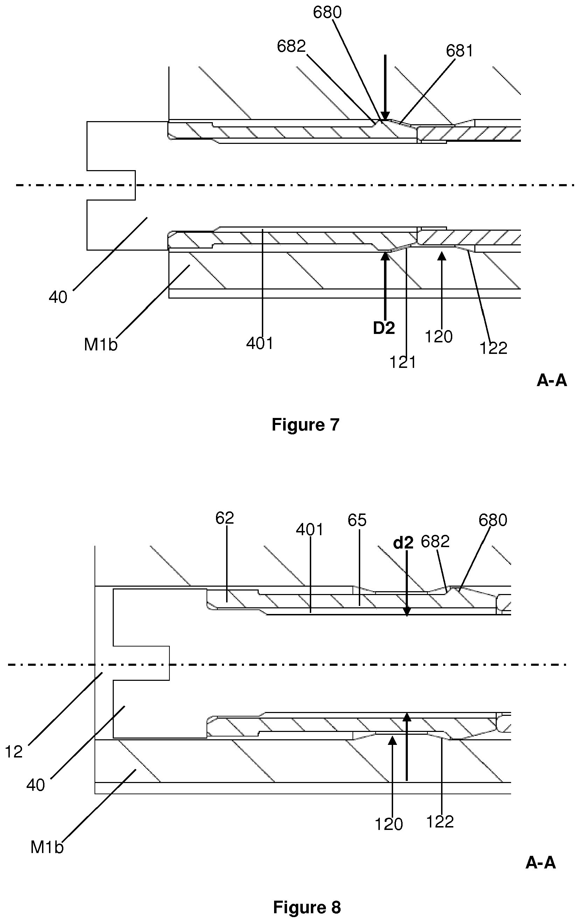

La maille M1b du premier maillon M1 est traversée par un perçage ou une ouverture 12 de passage du dispositif d'assemblage 3, conformé pour loger la bague élastique 6. Comme cela apparaît plus particulièrement sur les figures 7 et 8, le perçage 12 comporte une zone 120 de plus petit diamètre, entourée de deux flancs inclinés 121, 122. Le diamètre de cette zone 120 reste toutefois supérieur ou égal au diamètre de l'axe 5 de guidage en pivotement pour permettre son insertion sans résistance au travers de l'ouverture 12.

Le dispositif d'assemblage 3 est préassemblé par la mise en oeuvre des étapes décrites ci-après :
- Lors d'une première étape, la bague élastique 6 et l'axe 5 sont disposés autour du corps de la vis 4. Pour cela, la bague élastique 6 est d'abord insérée par l'extrémité terminale 42 de la vis, jusqu'à ce que sa base annulaire 62 vienne en appui contre la portée 44 au niveau de la tête 40 de la vis. Ensuite, l'axe 5 est de même inséré par l'extrémité terminale de la vis, jusqu'à ce que sa première extrémité 52 vienne en appui contre la seconde extrémité 63 de la bague élastique 6. En remarque, la bague élastique 6, l'axe 5 et la vis 4 sont ainsi assemblés de manière coaxiale, et l'axe du dispositif d'assemblage 3 assemblé se confond donc avec l'axe AX de la vis 4 et de l'axe 5 et avec l'axe central de la bague élastique 6.
- Lors d'une seconde étape, la section annulaire de jonction 421 de la partie terminale 42 est introduite par l'extrémité terminale de la vis, jusqu'à ce que sa première extrémité 423 vienne en appui contre la seconde extrémité 53 de l'axe 5. Ensuite, cette section annulaire de jonction 421 est solidarisée à la vis.

A l'issue de ces étapes de montage du dispositif d'assemblage 3, l'axe 5 se trouve interposé entre deux surfaces de butée, constituées d'une part par la portée 44, par l'intermédiaire de la bague élastique 6 interposée, et d'autre part par l'extrémité 423 de la section annulaire de jonction 421 de l'extrémité libre de la partie terminale 42. Un jeu peut toutefois être ménagé au niveau de ces surfaces de butée. L'axe 5 peut ainsi rester mobile en rotation autour de la vis 4, mais bloqué axialement par la tête de vis 40 et par la section annulaire de jonction 421 en forme d'anneau.

En variante, l'axe 5 peut être solidarisé à la vis, par exemple par chassage ou soudage sur le corps de la vis 4, auquel cas sa rotation relativement à la vis 4 sera empêchée. En variante, cette rotation peut être empêchée par le biais d'un profil non circulaire d'une surface en correspondance de la vis 4 et/ou de l'axe 5. Cette solution peut notamment être retenue si l'axe est dans un matériau difficile à chasser ou souder, comme en céramique.

On va maintenant décrire, en référence avec les figures 7 et 8, le procédé d'assemblage des deux maillons M1, M2 à l'aide du dispositif d'assemblage 3 une fois assemblé.

Lors d'une première étape, les maillons M1 et M2 sont placés en position d'assemblage. A cet effet, la portion d'extrémité latérale 20 de la maille centrale du second maillon M2 est introduite dans le logement 10 formé entre les deux mailles M1a et M1b du premier maillon M1. Les ouvertures 11, 21 et 12 sont alignées de manière à former un passage de réception du dispositif d'assemblage 3.

Lors d'une deuxième étape, le dispositif d'assemblage 3 est introduit à travers ce passage formé par les ouvertures 11, 21 et 12, jusqu'à ce que la portion 680 de plus grand diamètre de la bague élastique 6 vienne coopérer avec un premier flanc incliné 121 d'une zone 120 de diamètre réduit de l'ouverture 12 de la maille M1b. La figure 7 représente la situation intermédiaire dans laquelle la portion 680 de plus grand diamètre des pattes élastiques 65 vient en contact avec le premier flanc incliné 121. Dans le même temps, la section filetée 420 de la vis 4 vient coopérer avec le filetage 110 correspondant de l'ouverture 11 de l'autre maille latérale M1a du premier maillon M1.

Lors d'une troisième étape, le vissage de la vis 4 permet de poursuivre son insertion au sein des ouvertures 11, 21, et 12. Pour cela, la vis 4 est tournée, par exemple par un opérateur, par entraînement en rotation de la tête de vis 400. Le couple de vissage exercé pour faire tourner la vis 4 doit être supérieur au couple résistant exercé par le contact de la bague élastique 6 contre le flanc 121 à l'intérieur de l'ouverture 12. Autrement dit, l'opérateur doit vaincre le couple de friction exercé par ce contact.

Sous l'action d'être tournée, la vis 4 se déplace selon un mouvement hélicoïdal comportant une composante axiale dirigée dans le sens de vissage : ce vissage commence dès que l'extrémité filetée 420 de la vis 4 s'engage dans le taraudage 110 de la maille M1a. Lors de son déplacement hélicoïdal, la vis 4 est entraînée en translation axiale, ce qui provoque la translation axiale de l'axe 5 et de l'ensemble du dispositif d'assemblage, qui pénètre ainsi dans le passage formé par les ouvertures 11, 21 et 12 traversant les maillons M1 et M2.

Dans ce mouvement d'insertion, les pattes élastiques 65 de la bague élastique 6 sont rabattues vers la surface de la vis 4 au sein de l'espace 401, ce qui permet à la portion 680 de plus grand diamètre de la bague élastique 6 de s'escamoter pour dépasser la zone 120 de diamètre réduit de l'ouverture 12. Dans ce mouvement de la bague élastique, le premier flanc incliné 681 de l'extrémité de la bague élastique 6 glisse contre un flanc incliné 121 de pente semblable de la zone 120 de diamètre réduit de l'ouverture 12. Ces deux flancs inclinés permettent ainsi la déformation élastique adéquate de la bague élastique 6 lors de l'insertion du dispositif d'assemblage 3. En remarque, la zone 120 et la géométrie de la bague élastique 6 sont configurées pour obtenir l'escamotage de la bague lors de son insertion, puis son maintien en position finale, sans gêner l'insertion ni le retrait du reste du dispositif d'assemblage 3.

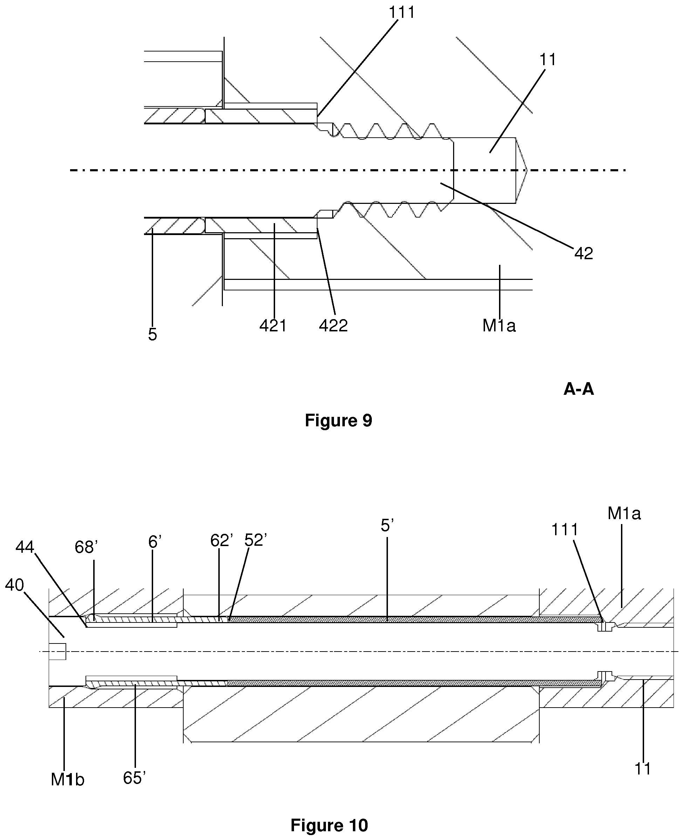

La figure 8 représente la position finale de la bague élastique 6, lorsque le dispositif d'assemblage 3 a atteint sa position finale, dans laquelle la tête 40 de la vis 4 est entièrement logée au sein de l'ouverture 12. Cette position finale est avantageusement définie par une butée formée par une maille, contre laquelle vient s'appuyer le dispositif d'assemblage 3. Dans ce mode de réalisation, cette butée est agencée par une portée 111 au niveau de l'ouverture 11 de la maille M1a. Comme représenté sur la figure 9, l'extrémité 422 de la section d'assemblage 421 du dispositif d'assemblage 3 se trouve en butée contre cette portée 111 de l'ouverture 11. En variante, le positionnement longitudinal du dispositif d'assemblage 3 par rapport aux maillons M1 et M2 pourrait être réalisé par une butée alternative ou additionnelle contre laquelle la vis 4 viendrait en butée.

Dans la position finale du dispositif d'assemblage 3, la bague élastique 6 a dépassé la zone 120 de l'ouverture 12 pour atteindre une zone de diamètre plus large, de diamètre supérieur au diamètre D1, dans laquelle les pattes élastiques 65 de la bague élastique 6 ont pu retrouver leur configuration initiale, par retour élastique. Dans la position finale, la bague élastique se trouve donc au repos, et ses pattes élastiques ne subissent aucune contrainte. Leur compression est donc réalisée pendant un instant réduit, au moment de l'insertion du dispositif d'assemblage, et la bague élastique subit ainsi une usure minimale. Dans la position finale, le dispositif d'assemblage ne subit ainsi aucune contrainte radiale, aucun serrage sur sa surface extérieure. En variante, la bague pourrait rester compressée et contrainte dans sa position finale, pour offrir une résistance par frottement complémentaire au blocage axial.

En position finale du dispositif d'assemblage 3, le maintien axial de l'axe 5 de guidage en pivotement vis-à-vis des maillons M1, M2 est principalement opéré par la force exercée par les filets 420 de la vis 4 au sein du trou taraudé 11 du maillon M1. Les maillons M1 et M2 sont ainsi assemblés, le maillon M2 pouvant pivoter par rapport au maillon M1 autour de l'axe 5 de guidage en pivotement.

Lors du porter du bracelet ou de chocs, des contacts répétitifs entre la surface extérieure 55 de l'axe 5 et la paroi interne du trou 21 du maillon central M2 se produisent. Cela induit de légers déplacements angulaires de l'axe 5 par rapport au maillon extérieur M1. Ces déplacements angulaires seraient susceptibles de produire un dévissage inopiné de la vis 4 et un démontage accidentel du dispositif d'assemblage 3. Toutefois, un tel événement ne peut pas se produire avec la solution selon ce mode de réalisation, car un second flanc incliné 122 de la zone 120 de diamètre réduit de l'ouverture 12 forme un obstacle contre lequel l'extrémité 68 des pattes élastiques 65 de la bague élastique 6, en saillie sur le dispositif d'assemblage 3, reste bloquée, empêchant tout mouvement arrière intempestif du dispositif d'assemblage 3. Grâce à cela, la vis 4 n'est pas impactée par les contacts répétés entre le maillon central M2 et l'axe 5. Elle reste dans sa position vissée. Le risque de dévissage intempestif est ainsi éliminé.

Pour démonter le dispositif d'assemblage 3, afin de désolidariser les maillons M1 et M2, il suffit à un opérateur de tourner la vis 4 dans le sens de dévissage, par le biais de la tête de vis 400, en exerçant un couple de dévissage supérieur au couple résistant formé par la coopération des pattes élastiques 65 avec l'ouverture 12, explicitée ci-dessus. Sous l'action d'être tournée dans le sens de dévissage, la vis 4 effectue un mouvement hélicoïdal qui permet le démontage du dispositif d'assemblage 3, lors duquel les pattes élastiques 65 sont soumises à une compression temporaire, de manière similaire et réversible à la phase de vissage explicitée précédemment. Dans cette phase, les autres flancs inclinés 682, 122 de respectivement la portion 680 de plus grand diamètre de la bague élastique et de la zone 120 de diamètre réduit de l'ouverture 12 coopèrent pour permettre l'escamotage élastique de la bague élastique.

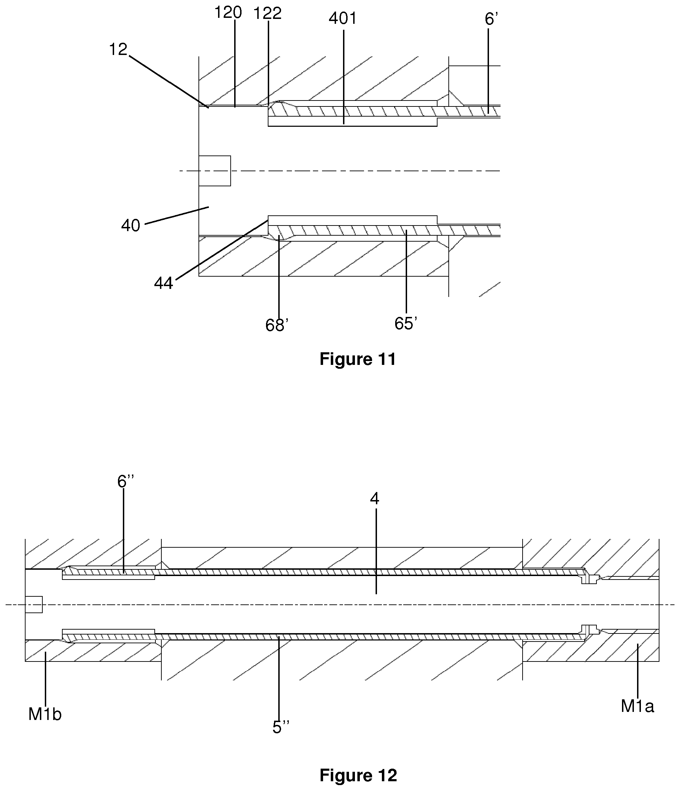

Les figures 10 et 11 représentent une deuxième forme de réalisation du dispositif d'assemblage 3 de l'invention. Par souci de clarté, seuls les éléments qui diffèrent de la première forme de réalisation décrite vont maintenant être décrits.

Dans cette deuxième forme de réalisation, la section annulaire de jonction 421 prévue dans le premier mode de réalisation est supprimée, et l'axe 5' de guidage en pivotement s'étend jusqu'à la partie terminale de la vis 4, venant en butée directe contre la portée 111 de l'ouverture 11 de la maille M1a. D'autre part, la bague élastique 6' comprend une base annulaire 62' disposée dans le prolongement de la première extrémité 52' de l'axe 5' de guidage en pivotement. Les pattes élastiques 65' s'étendent depuis cette base annulaire 62', dans une direction opposée à celle du premier mode de réalisation. L'extrémité 68' de ces pattes élastiques 65' peut venir en appui sur la portée 44 de la tête 40 de la vis 4. La surface intérieure de l'ouverture 12 de la maille M1b forme aussi un seul flanc 122 permettant le retrait du dispositif d'assemblage 3, mais empêchant son dévissage inopiné, selon un mécanisme semblable à celui du premier mode de réalisation. L'escamotage de la bague élastique 6' dans un espace 401 formé par une gorge de la vis 4 est réalisé par l'embouchure de l'ouverture 12, qui reçoit la tête 40 de la vis 4 en position finale.

La figure 12 représente un troisième mode de réalisation, similaire au précédent, dans lequel l'axe 5" de guidage en pivotement intègre aussi la bague élastique 6". Ainsi, dans ce troisième mode de réalisation, l'axe 5" de guidage en pivotement comprend dans une même pièce l'axe 5, la section annulaire de jonction 421 et la bague élastique 6 du premier mode de réalisation, d'un seul tenant.

Dans un quatrième mode de réalisation non représenté, une partie du corps de la vis pourrait représenter directement l'axe de guidage en pivotement. Dans un tel mode de réalisation, l'axe 5 de guidage en pivotement et la vis 4 des modes de réalisation précédents ne formeraient plus deux pièces distinctes mais une seule pièce. Dans ce mode de réalisation, le corps de la vis pourrait comprendre une gorge vers la tête de la vis, au sein de laquelle serait fixée une bague élastique. Cette bague élastique pourrait se présenter sous la forme d'un anneau fendu, pour former des pattes élastiques. Cette réalisation présenterait l'avantage de minimiser le nombre de pièces utilisées.

Dans tous les modes de réalisation décrits précédemment, le dispositif d'assemblage comprend finalement un premier élément remplissant la fonction de vissage, sous la forme d'une partie filetée, pour une fixation adéquate et amovible du dispositif d'assemblage, et un second élément de blocage axial, sous la forme d'une bague élastique, remplissant la fonction de blocage axial du dispositif d'assemblage lors des faibles sollicitations induites notamment lors du porter du bracelet, afin d'éviter finalement le dévissage intempestif du premier élément.

Ces deux éléments ont été agencés précédemment sur deux extrémités différentes du dispositif d'assemblage, pour agir par coopération au sein de deux mailles de bord distinctes d'un maillon de bracelet. En variante, ils peuvent être disposés à proximité l'un de l'autre, pour coopérer au sein d'une même maille. Par exemple, la section filetée de la vis pourrait jouxter la tête de vis. En variante, la bague élastique pourrait être agencée vers l'extrémité de la vis opposée à la tête.

Le second élément de blocage se présente ici sous la forme d'une bague élastique, présentant deux pattes élastiques, s'étendant dans une direction longitudinale, parallèlement à l'axe du dispositif d'assemblage. Naturellement, la bague élastique pourrait en variante comprendre trois ou plus de trois pattes élastiques, voire une seule patte élastique. En variante, la bague élastique pourrait se présenter sous la forme d'un anneau fendu mis en oeuvre par exemple par un ressort fil. En variante, plusieurs bagues élastiques pourraient être utilisées.

Préférentiellement, la bague élastique est montée mobile en rotation autour du corps de la vis. En variante, elle pourrait être montée autour de l'axe de guidage en pivotement. De plus, elle peut soit être formée par un élément distinct, soit être solidaire de l'axe de guidage en pivotement, voire de la vis. Ainsi, la bague élastique peut être fixée sur le corps de la vis.

Cette bague élastique pourrait se présenter sous toute autre forme géométrique, comprenant une ou plusieurs parties coopérant par obstacle avec une partie de géométrie particulière d'un maillon, formant un rétrécissement, pour représenter un obstacle au déplacement axial de la bague élastique, suffisant pour bloquer son déplacement et celui de l'ensemble du dispositif d'assemblage, lors du simple porter d'un bracelet, mais permettant la libération de la bague élastique lors d'un effort de vissage ou dévissage manuel du dispositif d'assemblage. Pour cela, la bague peut comprendre un ou deux flancs inclinés pour favoriser sa déformation élastique lors de son retrait ou insertion.

La géométrie et le matériau de la bague élastique sont définis de sorte que sa compression engendre un couple résistif minimal lors du vissage ou du dévissage de la vis, tout en bloquant axialement le dispositif d'assemblage lors des sollicitations exercées par un simple porter. Avantageusement, la bague élastique est réalisée en acier ressort, par exemple en Phynox, ou en Phytime, ou en Nivaflex.

## Revendications

1. Dispositif d'assemblage (3) pour attacher à pivotement au moins deux pièces (M1, M2), comportant une vis (4) destinée à être vissée dans une première pièce (M1) et portant un axe (5) de guidage en pivotement d'une deuxième pièce (M2), le dispositif d'assemblage (3) comprenant au moins une bague élastique (6) apte à coopérer avec un élément formant obstacle de l'une des deux pièces (M1, M2), afin de bloquer le déplacement axial intempestif du dispositif d'assemblage (3), **caractérisé en ce que** la bague élastique (6) comprend une base annulaire (62) d'où s'étendent au moins deux pattes élastiques (65) parallèlement à l'axe du dispositif d'assemblage (3), ces pattes élastiques (65) comprenant une portion (680) apte à coopérer avec un élément formant obstacle de l'une des deux pièces (M1, M2) de plus grand diamètre que le diamètre de l'axe (5) de guidage en pivotement, entourée d'au moins un flanc incliné (681, 682) pour favoriser l'insertion et/ou le retrait du dispositif d'assemblage (3) des deux pièces (M1, M2).

2. Dispositif d'assemblage selon la revendication précédente, **caractérisé en ce que** la bague élastique (6) comprend au moins une patte élastique (65) agencée sur la périphérie de la vis (4) et/ou de l'axe (5) de guidage en pivotement.

3. Dispositif d'assemblage selon l'une des revendications 1 ou 2, **caractérisé en ce que** la bague élastique (6) est disposée autour de la vis (4), et **en ce qu'**il y a un espace (401) entre des pattes élastiques (65) de la bague élastique (6) et la vis (4) pour permettre le rapprochement élastique de ces pattes élastiques (65) vers la vis (4) lors de l'insertion et du retrait du dispositif d'assemblage (3) des deux pièces (M1, M2).

4. Dispositif d'assemblage selon l'une des revendications précédentes, **caractérisé en ce que** la vis (4) comprend une partie (40) présentant un premier diamètre D1 délimitant une portée (44), une partie centrale (41) de plus petit diamètre d1 autour de laquelle est disposé l'axe (5) de guidage en pivotement, cet axe (5) de guidage en pivotement présentant un diamètre sensiblement égal au premier diamètre D1, et **en ce que** la bague élastique (6) est disposée en butée entre la portée (44) et l'axe (5) de guidage en pivotement et présente une partie élastique présentant une portion (680) de plus grand diamètre D2, qui est notamment supérieur au premier diamètre D1.

5. Dispositif d'assemblage selon l'une des revendications 1 à 3, **caractérisé en ce que** la vis (4) comprend une partie centrale autour de laquelle est disposée l'axe (5) de guidage en pivotement et **en ce que** la bague élastique (6) est solidaire de l'axe (5) de guidage en pivotement, agencée à une de ses extrémités, voire est directement formée dans l'axe (5) de guidage en pivotement avec lequel elle ne forme qu'une seule pièce.

6. Dispositif d'assemblage selon l'une des revendications précédentes, **caractérisé en ce que** la vis (4) comprend une tête (40), une partie centrale (41) et une partie terminale (42) qui comprend une section filetée (420) de plus petit diamètre que le diamètre de la partie centrale (41).

7. Dispositif d'assemblage selon l'une des revendications précédentes, **caractérisé en ce que** l'axe (5) de guidage en pivotement est distinct de la vis (4) et mobile en rotation autour de la vis (4) ou fixe par rapport à la vis (4), ou **en ce que** l'axe (5) de guidage en pivotement et la vis (4) forment une même pièce.

8. Dispositif d'assemblage selon l'une des revendications précédentes, **caractérisé en ce que** l'axe (5) de guidage en pivotement est en céramique frittée ou en matériau composite, notamment formé d'un mélange de céramique et d'un métal ou d'un polymère, et/ou **en ce que** la bague élastique (6) est en acier ressort.

9. Ensemble comportant au moins deux pièces (M1, M2) attachées à l'aide du dispositif d'assemblage (3) selon l'une des revendications 1 à 8.

10. Ensemble selon la revendication précédente, **caractérisé en ce qu'**une ouverture (12) d'une pièce (M1) comprend une zone (120) de plus petit diamètre formant un obstacle à la bague élastique (6) empêchant le retrait axial intempestif du dispositif d'assemblage (3).

11. Ensemble selon la revendication 9 ou 10, **caractérisé en ce que** la zone (120) de plus petit diamètre permet l'escamotage de la bague élastique (6) et le passage du reste du dispositif d'assemblage (3) pour son insertion et/ou son retrait dans les ouvertures (11, 12, 21) des pièces (M1, M2) à attacher.

12. Ensemble selon l'une des revendications 9 à 11, **caractérisé en ce que** la bague élastique (6) du dispositif d'assemblage (3) occupe une position finale non contrainte quand les deux pièces (M1, M2) sont attachées à l'aide du dispositif d'assemblage (3).

13. Ensemble selon l'une des revendications 9 à 11, **caractérisé en ce que** la bague élastique (6) et la zone la zone (120) de plus petit diamètre de l'ouverture (12) d'une pièce (M1) comprennent chacun un ou deux flancs inclinés (681, 682; 121, 122) respectifs, d'inclinaison proche, pour favoriser l'insertion et/ou le retrait lors du vissage et/ou dévissage du dispositif d'assemblage (3) pour son insertion et/ou son retrait.

14. Bracelet comportant au moins un ensemble selon l'une des revendications 9 à 13 ou au moins deux maillons (M1, M2) attachés à l'aide du dispositif d'assemblage (3) selon l'une des revendications 1 à 8.

15. Procédé d'assemblage à pivotement d'au moins deux pièces (M1, M2) à l'aide du dispositif d'assemblage (3) selon l'une des revendications 1 à 8, **caractérisé en ce qu'**il comprend, après introduction du dispositif d'assemblage (3) dans une ouverture (21) traversant une deuxième pièce (M2), une étape de vissage lors de laquelle la vis (4) est vissée dans une première pièce (M1), entraînant en translation axiale l'axe (5) de guidage en pivotement du dispositif d'assemblage (3) et la déformation élastique de la bague élastique (6) du dispositif d'assemblage (3).

## Patentansprüche

1. Verbindungsvorrichtung (3) zum schwenkbaren Verbinden zweier Teile (M1, M2), die eine Schraube (4) umfasst, die dazu vorgesehen ist, in ein erstes Teil (M1) geschraubt zu werden und die eine Achse (5) zur Führung der Schwenkbewegung eines zweiten Teils (M2) trägt, wobei die Verbindungsvorrichtung (3) mindestens einen elastischen Ring (6) umfasst, der dazu geeignet ist, mit einem gegenüber einem der beiden Teile (M1, M2) ein Hindernis bildendes Element zusammenzuwirken, um die unbeabsichtigte axiale Verschiebung der Verbindungsvorrichtung (3) zu verhindern, **dadurch gekennzeichnet, dass** der elastische Ring (6) eine ringförmige Basis (62) umfasst, von der aus sich mindestens zwei elastische Zungen (65) parallel zur Achse der Verbindungsvorrichtung (3) erstrecken, wobei diese elastischen Zungen (65) einen Abschnitt (680) umfassen, der dazu geeignet ist, mit einem gegenüber einem der beiden Teile (M1, M2) ein Hindernis bildendes Element mit einem größeren Durchmesser als die Achse zur Führung der Schwenkbewegung (5) zusammenzuwirken, die von wenigstens einer geneigten Flanke (681, 682) umgriffen wird, die das Einführen und/oder das Herausziehen der Verbindungsvorrichtung (3) aus den beiden Teilen (M1, M2) vereinfacht.

2. Verbindungsvorrichtung gemäß dem vorangehenden Anspruch, **dadurch gekennzeichnet, dass** der elastische Ring (6) wenigstens eine elastischen Zunge (65) umfasst, die auf dem Außenumfang der Schraube (4) und/oder der Achse zur Führung der Schwenkbewegung (5) angeordnet ist.

3. Verbindungsvorrichtung gemäß einem der Ansprüche 1 oder 2, **dadurch gekennzeichnet, dass** der elastische Ring (6) um die Schraube (4) herum angeordnet ist und dass zwischen den elastischen Zungen (65) des elastischen Rings (6) und der Schraube (4) ein Freiraum (401) vorgesehen ist, um das elastische Aufeinanderzubewegen dieser elastischen Zungen (65) in Richtung der Schraube (4) während des Einführens oder des Herausziehens der Verbindungsvorrichtung (3) aus den beiden Teilen (M1, M2) zu ermöglichen.

4. Verbindungsvorrichtung gemäß einem der vorangehenden Ansprüche, **dadurch gekennzeichnet, dass** die Schraube (4) einen Abschnitt (40) umfasst, der einen ersten Durchmesser D1 aufweist, der eine Anlagefläche (44) begrenzt, einen zentralen Abschnitt (41) von kleinerem Durchmesser d1, um den herum die Achse (5) zur Führung der Schwenkbewegung angeordnet ist, wobei die Achse (5) zur Führung der Schwenkbewegung einen Durchmesser aufweist, der im Wesentlichen gleich dem Durchmesser D1 ist, und, dass der elastische Ring (6) in Anlage zwischen der Anlagefläche (44) und der Achse (5) zur Führung der Schwenkbewegung angeordnet ist und einen elastischen Abschnitt darstellt, der einen Teil (680) mit größerem Durchmesser D2 aufweist, der insbesondere größer ist als der erste Durchmesser D1.

5. Verbindungsvorrichtung gemäß einem der Ansprüche 1 bis 3, **dadurch gekennzeichnet, dass** die Schraube (4) einen zentralen Abschnitt aufweist, um den herum die Achse (5) zur Führung der Schwenkbewegung angeordnet ist, und, dass der elastische Ring (6) fest mit der Achse (5) zur Führung der Schwenkbewegung verbunden ist, an einem ihrer Enden angeordnet ist, oder sogar in die Achse (5) zur Führung der Schwenkbewegung eingearbeitet ist, mit der er einteilig ausgebildet ist.

6. Verbindungsvorrichtung gemäß einem der vorangehenden Ansprüche, **dadurch gekennzeichnet, dass** die Schraube (4) einen Kopf (40) umfasst, einen zentralen Abschnitt (41) und einen Endabschnitt (42), der einen Gewindeabschnitt (420) umfasst, der einen kleineren Durchmesser aufweist als der Durchmesser des zentralen Abschnitts (41).

7. Verbindungsvorrichtung gemäß einem der vorangehenden Ansprüche, **dadurch gekennzeichnet, dass** die Achse (5) zur Führung der Schwenkbewegung von der Schraube (4) getrennt und rotationsbeweglich um die Schraube (4) herum ausgebildet ist oder fest im Verhältnis zur Schraube (4), oder dass die Achse (5) zur Führung der Schwenkbewegung und die Schraube (4) ein und dasselbe Teil ausbilden.

8. Verbindungsvorrichtung gemäß einem der vorangehenden Ansprüche, **dadurch gekennzeichnet, dass** die Achse (5) zur Führung der Schwenkbewegung aus gesinterter Keramik oder aus einem Verbundmaterial besteht, insbesondere gebildet aus einer Mischung aus Keramik und einem Metall oder einem Polymer, und/oder dass der elastische Ring (6) aus Federstahl besteht.

9. Einheit, umfassend mindestens zwei Teile (M1, M2), die mit Hilfe der Verbindungsvorrichtung (3) gemäß einem der Ansprüche 1 bis 8 verbunden sind.

10. Einheit gemäß dem vorangehenden Anspruch, **dadurch gekennzeichnet, dass** eine Öffnung (12) eines Teils (M1) einen Bereich (120) mit einem kleineren Durchmesser umfasst, der ein Hindernis gegenüber dem elastischen Ring (6) bildet und das unbeabsichtigte axiale Herausziehen der Verbindungsvorrichtung (3) verhindert.

11. Einheit gemäß Anspruch 9 oder 10, **dadurch gekennzeichnet, dass** der Bereich (120) von kleinerem Durchmesser das Einsenken des elastischen Rings (6) und die Passage der restlichen Verbindungsvorrichtung (3) zur Einführung in und/oder zum Herausziehen aus den Öffnungen (11, 12, 21) der zu verbindenden Teile (M1, M2) ermöglicht.

12. Einheit gemäß einem der Ansprüche 9 bis 11, **dadurch gekennzeichnet, dass** der elastische Ring (6) der Verbindungsvorrichtung (3) eine nicht unter Spannung stehende Endlage einnimmt, wenn die beiden Teile (M1, M2) mit Hilfe der Verbindungsvorrichtung (3) verbunden sind.

13. Einheit gemäß einem der Ansprüche 9 bis 11, **dadurch gekennzeichnet, dass** der elastische Ring (6) und der Bereich (120) von kleinerem Durchmesser der Öffnung (12) eines Teils (M1) jeder jeweils eine oder zwei geneigte Flanken (681, 682; 121, 122) mit einer benachbarten Neigung aufweisen, um das Einführen und/oder das Herausziehen während des Aufschraubens und/oder Herausschraubens der Verbindungsvorrichtung (3) während ihrer Einführung und/oder ihres Herausziehens zu vereinfachen.

14. Armband, umfassend mindestens eine Einheit gemäß den Ansprüchen 9 bis 13 oder mindestens zwei Glieder (M1, M2), die mit Hilfe der Verbindungsvorrichtung (3) gemäß einem der Ansprüche 1 bis 8 verbunden sind.

15. Verfahren zum schwenkbaren Verbinden mindestens zweier Teile (M1, M2) mit Hilfe der Verbindungsvorrichtung (3) gemäß einem der Ansprüche 1 bis 8, **dadurch gekennzeichnet, dass** es, nach Einführen der Verbindungsvorrichtung (3) in eine Öffnung (21) und Durchdringen eines zweiten Teils (M2), einen Schritt zur Verschraubung umfasst, bei welchem die Schraube (4) in ein erstes Teil (M1) eingeschraubt wird, was zur translatorischen Bewegung der Achse (5) zur Führung der Schwenkbewegung der Verbindungsvorrichtung (3) und zur elastischen Verformung des elastischen Rings (6) der Verbindungsvorrichtung (3) führt.

## Claims

1. An assembly device (3) for pivotally attaching at least two parts (M1, M2), comprising a screw (4) designed to be screwed into a first piece (M1) and carrying a pivoting guide pin (5) for a second part (M2), the assembly device (3) comprising at least one elastic ring (6) able to work in conjunction with a blocking element of one of the two parts (M1, M2), so as to prevent accidental axial movement of the assembly device (3), **characterized in that** the elastic ring (6) comprises an annular base (62) from where extend at least two elastic clips (65) parallel to the axis of the assembly device (3), these elastic clips (65) comprising a portion (680) able to work in conjunction with a blocking element of one of the two parts (M1, M2) of greater diameter than the diameter of the pivoting guide pin (5), surrounded by at least one beveled edge (681, 682) to promote the insertion and/or removal of the assembly device (3) into/from the two parts (M1, M2).

2. The assembly device as claimed in the previous claim, **characterized in that** the elastic ring (6) comprises at least one elastic clip (65) arranged on the periphery of the screw (4) and/or of the pivoting guide pin (5).

3. The assembly device as claimed in either of claims 1 or 2, **characterized in that** the elastic ring (6) is arranged around the screw (4), and **characterized in that** there is a space (401) between the elastic clips (65) of the elastic ring (6) and the screw (4) to allow the elastic return of these elastic clips (65) toward the screw (4) during insertion and removal of the assembly device (3) into and from the two parts (M1, M2).

4. The assembly device as claimed in one of the previous claims **characterized in that** the screw (4) comprises a part (40) having a first diameter D1 defining a bearing surface (44), a central part (41) of smaller diameter d1 around which is arranged the pivoting guide pin (5) of diameter substantially equal to the first diameter D1, and such that the elastic ring (6) abuts between the bearing surface (44) and the pivoting guide pin (5) and has an elastic part with a portion (680) of greater diameter D2, which is notably greater than the first diameter D1.

5. The assembly device as claimed in one of claims 1 to 3, **characterized in that** the screw (4) comprises a central section around which is arranged the pivoting guide pin (5) and **characterized in that** the elastic ring (6) is integral with the pivoting guide pin (5), arranged at one of its ends, or is even directly formed in the pivoting guide pin (5) with which it forms a single piece.

6. The assembly device as claimed in one of the previous claims, **characterized in that** the screw (4) comprises a head (40), a central part (41) and an end part (42) which comprises a threaded section (420) of smaller diameter than the diameter of the central part (41).

7. The assembly device as claimed in one of the previous claims, **characterized in that** the pivoting guide pin (5) is separate from the screw (4) and rotatably mobile around the screw (4) or fixed relative to the screw (4), or **characterized in that** the pivoting guide pin (5) and the screw (4) form the same part.

8. The assembly device as claimed in one of the previous claims, **characterized in that** the pivoting guide pin (5) is made of sintered ceramic or composite material, notably formed from a mixture of ceramic and metal or a polymer, and/or **characterized in that** the elastic ring (6) is made of spring steel.

9. An assembly comprising at least two parts (M1, M2) attached by means of the assembly device (3) as claimed in one of claims 1 to 8.

10. The assembly as claimed in the previous claim, **characterized in that** an opening (12) of a part (M1) comprises a zone (120) of smaller diameter forming an obstacle to the elastic ring (6) preventing the untimely axial removal of the assembly device (3).

11. The assembly as claimed in claim 9 or 10, **characterized in that** the zone (120) of smaller diameter allows the retraction of the elastic ring (6) and the passage of the rest of the assembly device (3) for its insertion into and/or removal from the openings (11, 12, 21) of the parts (M1, M2) to be attached.

12. The assembly as claimed in one of claims 9 to 11, **characterized in that** the elastic ring (6) of the assembly device (3) occupies a non-stressed final position when the two parts (M1, M2) are attached by means of the assembly device (3).

13. The assembly as claimed in one of claims 9 to 11, **characterized in that** the elastic ring (6) and the zone (120) of smaller diameter of the opening (12) of a part (M1) each comprise one or two beveled edges (681, 682, 121, 122) respectively, of similar inclination, to promote the insertion and/or the removal when screwing and/or unscrewing of the assembly device (3) for its insertion and/or removal.

14. A bracelet comprising at least one assembly as claimed in one of claims 9 to 13 or at least two links (M1, M2) attached by means of the assembly device (3) as claimed in one of claims 1 to 8.

15. A pivoting assembly method for at least two parts (M1, M2) by means of an assembly device (3) as claimed in one of claims 1 to 8, **characterized in that** it comprises, after introduction of the assembly device (3) into an opening (21) passing through a second part (M2), a screwing step during which the screw (4) is screwed into a first part (M1), driving in axial translation the pivoting guide pin (5) of the assembly device (3) and the elastic deformation of the elastic ring (6) of the assembly device (3).
